# EUROPÄISCHE PATENTSCHRIFT

(11) **EP 0 891 853 B1**
(45) Veröffentlichungstag und Bekanntmachung des Hinweises auf die Patenterteilung: **13.06.2001**
(21) Anmeldenummer: 98109312.3
(22) Anmeldetag: 22.05.1998
(51) Int. Cl.: B29C 47/10, B29C 47/92

(54) **Verfahren zum Verhindern von sogenannten Stippen in nach dem Giessverfahren oder nach dem Blasverfahren hergestellten Kunststoffolien**
Method to avoid imperfections in films produced by moulding or by extrusion blown film method
Procédé pour éviter des imperfections dans des feuilles en matière plastique fabriquées par moulage ou par un procédé d'extrusion-soufflage

(30) Priorität: 17.07.1997 DE 19730757
(43) Veröffentlichungstag der Anmeldung: 20.01.1999
(73) Patentinhaber: Windmöller & Hölscher, D-49525 Lengerich (DE)
(72) Erfinder: Feistkorn, Werner, Dr., 48369 Saerbeck (DE)

(56) Entgegenhaltungen:
- US-A- 4 529 306
- US-A- 4 756 855
- "Visual melt inspection analyzes extrudate in barrel" MODERN PLASTICS, Bd. 17, Nr. 7, Juli 1987, Seiten 15-16, XP002082726 LAUSANNE CH
- PATENT ABSTRACTS OF JAPAN vol. 095, no. 011, 26. Dezember 1995 & JP 07 205253 A (MARUYASU:KK), 8. August 1995
- PATENT ABSTRACTS OF JAPAN vol. 096, no. 012, 26. Dezember 1996 & JP 08 207135 A (TANAKA KAZUYUKI), 13. August 1996
- PATENT ABSTRACTS OF JAPAN vol. 014, no. 121 (M-0946), 7. März 1990 & JP 01 317743 A (CHIYUUGAI BOEKI KK;OTHERS: 01), 22. Dezember 1989

## Beschreibung

Die Erfindung betrifft ein Verfahren zum Verhindern von sog. Stippen bzw. zum Verringern der Anzahl der Stippen pro Flächeneinheit in nach dem Gießverfahren oder nach dem Blasverfahren hergestellten Kunststoffolien durch Einblasen von Stickstoff in den Fülltrichter des Extruders der Folienblasanlage.

In nach dem Blasverfahren hergestellten Kunststoffolien können sogenannte Stippen entstehen, die als kömige Punkte oder kleine Kreise in einer Folie sonst einheitlicher und gleichmäßiger Transparenz in Erscheinung treten. Diese als Stippen bezeichneten Störungsstellen entstehen aufgrund von Inhomogenitäten in der extrudierten Kunststoffschmelze, die durch das Einschleppen von Sauerstoff in den Extruder verursacht oder jedoch zumindest begünstigt werden. JP 07205253 (Maruyasu : KK) offenbart das Entstehen dieser Stippen dadurch zu unterdrücken oder zumindest zu verringern, daß in den Fülltrichter des Extruders Stickstoff eingeblasen wird. Das ständige Einblasen von Stickstoff in den Fülltrichter eines Extruders erfordert jedoch erhebliche Stickstoffmengen, so daß die ständige Begasung des Fülltrichters mit Stickstoff verhältnismäßig hohe Kosten verursacht.

Aufgabe der Erfindung ist es daher, ein Verfahren der eingangs angegebenen Art vorzuschlagen, das sich durch Einsparung von Stickstoff wirtschaftlicher durchführen läßt.

Erfindungsgemäß wird diese Aufgabe bei einem Verfahren der eingangs angegebenen Art dadurch gelöst, daß die Anzahl der Stippen pro Flächeneinheit in der gegossenen oder in der aufgeblasenen oder flachgelegten Kunststofffolie gemessen und bei Messung einer über einem vorgegebenen Wert liegenden Anzahl von Stippen pro Flächeneinheit Stickstoff in den Fülltrichter eingeblasen wird, bis eine kritische Anzahl von Stippen pro Flächeneinheit unterschritten ist.

Die Anzahl von Stippen pro Flächeneinheit in der nach dem Blasverfahren hergestellten Kunststoffolie läßt sich einfach durch bekannte Stippenmeßeinrichtungen erfassen, die die Folie über ihre Breite oder einen Teil ihrer Breite erfassen und der Anzahl der Stippen pro Flächeneinheit entsprechende Meßwerte liefern, die eine statistische Beurteilung des Stippengehalts einer Folie ermöglichen. Weiterhin liegt der Erfindung die Erkenntnis zugrunde, daß nach dem Absenken des Stippengehalts unter einen kritischen Wert oder nach vollständiger Beseitigung der Stippen die Zuführung von Stickstoff in den Fülltrichter des Extruders unterbrochen werden kann, ohne daß sofort wieder Stippen in einer unerwünschten Anzahl entstehen. Nach dem erfindungsgemäßen Verfahren erfolgt also gleichsam eine Art Regelung des zulässigen Stippengehalts durch bedarfsweise Zuführung von Stickstoff zu dem Fülltrichter des Extruders, wobei die Regelgröße die Anzahl der Stippen pro Flächeneinheit und die Stellgröße die Zugabemenge an Stickstoff ist.

Das erfindungsgemäße Verfahren läßt sich in einfacher Weise durch Verwendung eines Rechners (Mikrocomputers) durchführen, der entsprechend der gemessenen Anzahl an Stippen pro Flächeneinheit der extrudierten Kunststoffolie ein Ventil steuert, das über eine Leitung von einer Stickstoffquelle Stickstoff in den Fülltrichter eines Extruders einleitet.

Nach einer anderen Ausgestaltung der Erfindung kann statt Stickstoff zur Unterdrükkung der Stippenbildung auch ein anderes sauerstoffverhinderndes oder verdrängendes Gas und/oder Antioxidentien in Form von Pulvern oder Granulaten in den Fülltrichter eingegeben werden.

Das erfindungsgemäße Verfahren kann auch in der Weise durchgeführt werden, daß zur Unterdrückung der Stippenbildung neben Stickstoff zusätzlich Antioxidentien in Form von Pulvern oder Granulaten in den Fülltrichter eingegeben werden.

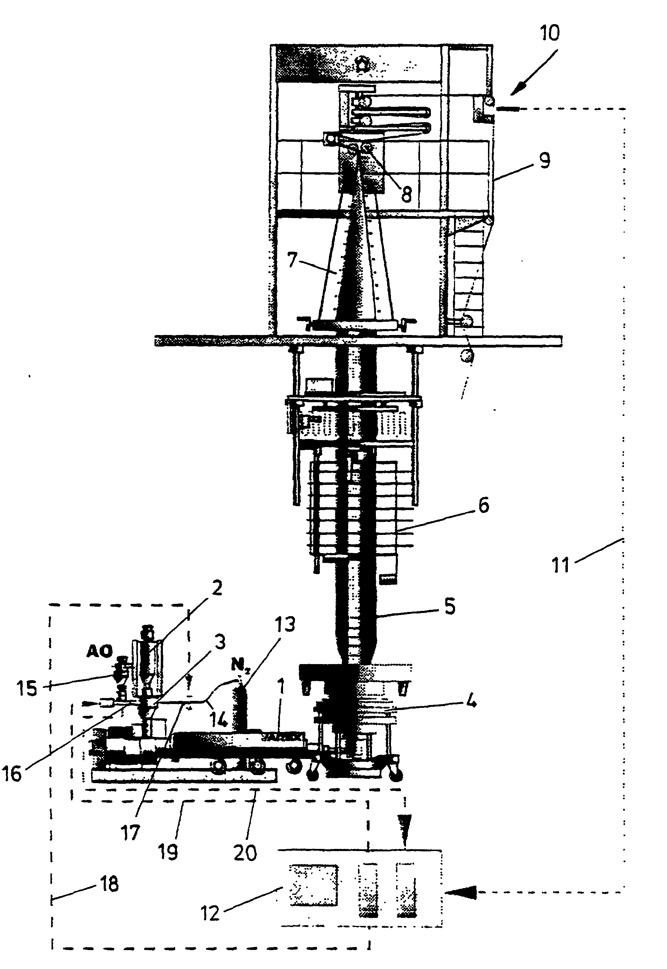

Ein Ausführungsbeispiel der Erfindung wird nachstehend anhand der Zeichnung, in deren einziger Figur eine Blasfolienanlage mit einem den Stippengehalt regelnden Regelkreis schematisch dargestellt ist, näher erläutert.

Einem Extruder 1 wird über einen Vorrats- oder Zwischenbehälter 2 und einen Fülltrichter 3 Kunststoffgranulat zugeführt. Die in dem Extruder 1 aufgeschmolzene und homogenisierte Kunststoffschmelze wird dem Folienblaskopf 4 zugeführt und aus der Ringdüse des Folienblaskopfes in Form eines Folienschlauches, der durch unter Überdruck stehende Innenluft, die durch den Folienblaskopf durchsetzende Zuführungs- und Abführungsleitungen als Innenkühlluft zugeführt wird, zu einer Schlauchfolienblase 5 aufgeblasen wird. Die durch Kalibriereinrichtungen 6 in ihrem Durchmesser kalibrierte Schlauchfolienblase 5 wird sodann durch Flachlegeeinrichtungen 7 flachgelegt und durch Abquetschwalzen 8 in flachgelegter Form abgezogen. Die flachgelegte Schlauchfolienbahn wird sodann über Leitrollen und Umlenkstangen zu einer nicht dargestellten Wickelvorrichtung geleitet, in der sie zu einer Schlauchfolienrolle aufgewickelt wird. Diese Art der Herstellung von Schlauchfolienbahnen ist bekannt und braucht daher nicht näher beschrieben zu werden.

Die flachgelegte und aus der Schlauchfolienblase 5 abgezogene Schlauchfolienbahn 9 passiert vor ihrem Aufwickeln zu einer Folienrolle eine Stippenmeßeinrichtung 10, die in bekannter Weise den Stippengehalt, also die Anzahl der Stippen pro Flächeneinheit mißt. Die von dem Stippenmeßgerät 10 gemessenen Werte werden in Form von Meßimpulsen über die gestrichelt eingezeichnete Leitung 11 dem Rechner 12 zugeführt. Mit dem Einfülltrichter 3 des Extruders 1 ist eine Stickstoff (N₂) speichernde Flasche 13 über eine Leitung 14 und/oder ein ein Antioxidans speichernder Vorratsbehälter 15 über einen Schneckenförderer 16 verbunden. In der den Stickstoff zuführenden Leitung 14 ist ein steuerbares Magnetventil 17 angeordnet. Mißt der Stippensensor 10 eine über einem kritischen Wert liegende Anzahl von Stippen pro Flächeneinheit, steuert der Rechner 12 über die Leitungen 18, 19 das Magnetventil 17 und/oder den steuerbaren Motor der Zuführungsschnecke 16 in der Weise an, daß dem Fülltrichter eine vorgegebene Menge von Stickstoff und/oder Antioxidans zugeführt wird. Der Rechner 12 enthält über die Leitung 20 eine Rückmeldung über die Schneckendrehzahl, also die zugeführte Menge von Antioxidans.

Meldet der Stippensensor dem Rechner 12, daß der Stippengehalt unter einem kritischen Wert gesunken ist, wird die Zuführung von Stickstoff und/oder Antioxidans unterbrochen oder verringert.

## Patentansprüche

1. Verfahren zum Verhindern von sogenannten Stippen bzw. zum Verringern der Anzahl der Stippen pro Flächeneinheit in nach Gießverfahren oder nach dem Blasverfahren hergestellten Kunststofffolien durch Einblasen von Stickstoff in den Fülltrichter des Extruders der Folienblasanlage,
**dadurch gekennzeichnet,**
daß die Anzahl der Stippen pro Flächeneinheit in der gegossenen oder in der aufgeblasenen oder flachgelegten Kunststofffolie gemessen und bei Messung einer über einem vorgegebenen Wert liegenden Anzahl von Stippen pro Flächeneinheit Stickstoff in den Fülltrichter eingeblasen wird, bis eine kritische Anzahl von Stippen pro Flächeneinheit unterschritten ist.

2. Verfahren nach Anspruch 1, dadurch gekennzeichnet, daß statt Stickstoff zur Unterdrückung der Stippenbildung ein anderes Sauerstoff (O2) verhinderndes oder verdrängendes Gas und/oder Antioxidentien in Form von Pulvern oder Granulaten in den Fülltrichter eingegeben werden.

3. Verfahren nach Anspruch 1, dadurch gekennzeichnet, daß zur Unterdrückung der Stippenbildung neben Stickstoff zusätzlich Antioxidentien in Form von Pulvern oder Granulaten in den Fülltrichter eingegeben werden.

## Revendications

1. Procédé pour éviter des soi-disant piqûres respectivement pour diminuer le nombre de piqûres par unité de surface dans des feuilles de matière synthétique fabriquées par un procédé de moulage ou un procédé d'extrusion-soufflage, par soufflage d'azote dans la trémie de l'extrudeuse de l'installation de soufflage de feuille,
**caractérisé en ce**
que le nombre de piqûres par unité de surface dans la feuille de matière synthétique moulée ou extrudée-soufflée ou posée à plat est mesuré, et que lors d'une mesure d'un nombre de piqûres par unité de surface supérieur à une valeur prédéterminée, de l'azote est soufflé dans la trémie jusqu'au passage en dessous d'un nombre critique de piqûres par unité de surface.

2. Procédé selon la revendication 1, caractérisé en ce que, à la place de l'azote pour supprimer la formation des piqûres, un autre gaz empêchant ou refoulant l'oxygène (O₂) et/ou des antioxydants sous la forme de poudres ou de granulés sont introduits dans la trémie.

3. Procédé selon la revendication 1, caractérisé en ce que, pour supprimer la formation des piqûres, sont introduits à part l'azote, de plus des antioxydants sous forme de poudres ou de granulés dans la trémie.

## Claims

1. Process for averting what are known as fish-eyes, or for reducing the number of the fish-eyes per unit of surface area, in cast or blown plastic films, by injecting nitrogen into the feed hopper of the extruder in the blown-film plant,
**characterized in that**
the number of the fish-eyes per unit of surface area in the cast plastic film, or in the blow-expanded plastic film, or in the flat-laid plastic film, is measured and, if the number of fish-eyes measured per unit of surface area is above a given value, nitrogen is injected into the feed hopper until the value is less than the critical number of fish-eyes per unit of surface area.

2. Process according to Claim 1, characterized in that the substances introduced into the feed hopper in order to suppress fish-eye formation are, instead of nitrogen, another gas which averts or drives out oxygen (O2), and/or are antioxidants in the form of powders or of pellets.

3. Process according to Claim 1, characterized in that, besides nitrogen, antioxidants in the form of powders or of pellets are introduced into the feed hopper in order to suppress fish-eye formation.
